# EUROPEAN PATENT SPECIFICATION

(11) **EP 2 591 975 B1**
(45) Date of publication and mention of the grant of the patent: **16.05.2018**
(21) Application number: 11306469.5
(22) Date of filing: 10.11.2011
(51) Int. Cl.: B62B 5/02

(54) **Trolley comprising a six wheeled undercarriage selectively rotating**
Trolley mit Fahrgestell mit sechs selektiv rotierenden Rädern
Chariot comprenant un châssis à six roulettes à rotation sélective

(43) Date of publication of application: 15.05.2013
(73) Proprietor: Lamory, M. Thierry, 91310 Linas (FR)
(72) Inventor: Lamory, M. Thierry, 91310 Linas (FR)
(74) Representative: Pontet Allano & Associes

(56) References cited:
- DE-A1- 2 618 639
- FR-A1- 2 907 749
- US-A- 2 633 363
- US-A- 2 706 640

## Description

### Background of the invention

The present invention relates to a trolley comprising a frame linked to a rear axle on which two groups of wheels are mounted, each group of wheels comprising three wheels on a support, the three wheels axles being spaced apart of a predetermined distance from the rear axle and are arranged at 120 degrees from each other around the rear axle.

The scope of the invention is particularly, but not limited to, the one of the trolleys for conveying loads.

Various embodiments of trolleys are already known. Two wheeled trolleys such as hand trucks are already known. These hand trucks offer a low rolling resistance and are easy to maneuver. But these trolleys need to be balanced while moved and are unable to climb up obstacles.

Trolleys with four wheels on the ground are also well known to carry loads. Such trolleys are stable, and can be moved only by pushing or pulling. But these trolleys can be difficult to maneuver, offer an important rolling resistance, and are unable to climb up obstacles.

Trolleys with six wheels undercarriage such as described by FR 2 907 749 are also known. These trolleys generally comprise two groups of three wheels mounted at 120 degrees on a support. The support is rotating relatively to the frame so that four wheels of the trolley are on the ground when the surface is flat. The six wheels enable the trolley to climb up obstacles, such as curbs or steps, by rotation of the support. US 2 633 363, which discloses the preamble of claim 1, DE 26 18 639, and US 2 706 640 disclose trolleys provided with ratchet wheels.

When the trolley is not climbing up obstacles, four wheels are permanently in contact with the ground. These trolleys can be difficult to maneuver, offer an important rolling resistance, and need to be balanced while moved.

The purpose of the present invention is to overcome at least partially the above drawbacks. In particular the purpose of the invention is to propose a trolley easy to maneuver, offering a low rolling resistance, stable and able to climb up obstacles.

### Brief summary of the invention

According to the invention, such purpose is accomplished by a trolley comprising a frame linked to a rear axle on which two groups of wheels are mounted, each group of wheels comprising three wheels on a support, the three wheels axles being spaced apart of a predetermined distance from the rear axle and are arranged at 120 degrees from each other around the rear axle, wherein a ratchet device including at least one ratchet wheel cooperating with at least one pawl enables a selective rotation of the support relative to the frame characterized in that, the said ratchet wheel has exactly three teeth separated by exactly three recesses, and in that the said ratchet device enables to maintain the support in a first position relative to the frame, such that two wheels of each group of wheels are on a ground when the trolley is in vertical position with a front basis on the ground and, the said ratchet device enables to maintain the support in a second position relative to the frame, such that two wheels of each group of wheels are on the ground when the trolley is in oblique position with its front basis off the ground, and wherein when the ratchet device blocks the rotation of the support relative to the frame, the trolley can be tilted in order to be used as a conventional two wheeled trolley.

The selective rotation of the support provided by the ratchet enables to use the trolley selectively as a conventional two wheeled trolley, a conventional four wheeled trolley, or a conventional six wheeled trolley.

When the ratchet device blocks the rotation of the support relative to the frame, the trolley can be tilted in order to be used as a conventional two wheeled trolley. In that case the trolley is easy to maneuver and offers a low rolling resistance.

When used as a conventional four wheeled trolley, the trolley remains stable and able to be moved only by pushing or pulling.

The ratchet device can enable the rotation of the support relative to the frame. In this case the trolley can be used as a conventional trolley with six wheels undercarriage. When used as a conventional six wheeled trolley, the trolley is able to climb up obstacles such as curbs or steps.

Conveniently the ratchet device can enable to maintain the support in a first position relative to the frame, such as two wheels of each group of wheels are on a ground when the trolley is in vertical position with a front basis on the ground.

In the first position, the trolley is very stable. It can be loaded easily without problem of load distribution. In this position the trolley requires a small floor area.

Advantageously the ratchet device can enable to maintain the support in a second position relative to the frame, such as two wheels of each group of wheels are on the ground when the trolley is in oblique position with its front basis off the ground.

In the second position the trolley can be used as a conventional 4 wheeled trolley, remaining stable and able to be moved only by pushing or pulling.

The front basis can be a U shaped element of the frame.

The ratchet device can include at least one ratchet wheel cooperating with at least one pawl.

The ratchet wheel can be connected to one support.

Each support can be connected to a ratchet wheel.

Advantageously the ratchet wheel can include three teeth separated by three recesses, which makes it possible to block selectively the rotation of the support relative to the frame whichever wheels are on the floor.

The pawl can slide within at least one frame groove of the frame between a locking position and a release position.

In the locking position the pawl can be engaged in at least one recess of the ratchet wheel.

A command can enable to move the pawl from the locking position to the release position.

The command can be a pedal rotating about a rear axle, said rear axle connecting the two supports.

The pawl can slide within a pedal groove of the pedal between the locking position and the release position.

The frame can include a handle. The handle is used to move and to incline the trolley.

The trolley can comprise a bag-like container mounted on the frame.

### Brief description of the several views of the drawings

Other features and advantages of the invention will also become clear from the description below, relating to non-limitative examples.

In the attached drawings:
- FIG. 1 diagrammatically represents a trolley equipped with a ratchet device according to the invention,
- FIG. 2 is a diagrammatic profile view of the trolley in the first position,
- FIG. 3 is a diagrammatic profile view of the trolley in a second position,
- FIG. 4 is a diagrammatic view in perspective of the undercarriage of a trolley according to the invention in the second position,
- FIG. 5 is a diagrammatic view of a ratchet device according to the invention,
- FIG. 6 is a diagrammatic profile view of the trolley in a third position, and
- FIG. 7 is a diagrammatic profile view of the trolley in a fourth position.

### Detailed description of the invention

These embodiments are not limiting. One can imagine including variants of the invention including only a selection of features described subsequently isolated from other features described, if the selection of features is sufficient to give a technical advantage or to distinguish the invention over the state of the art. This selection includes at least one characteristic preferentially functional without structural details, or with only some structural details if this part only is sufficient to confer a technical advantage or to distinguish the invention over the prior art.

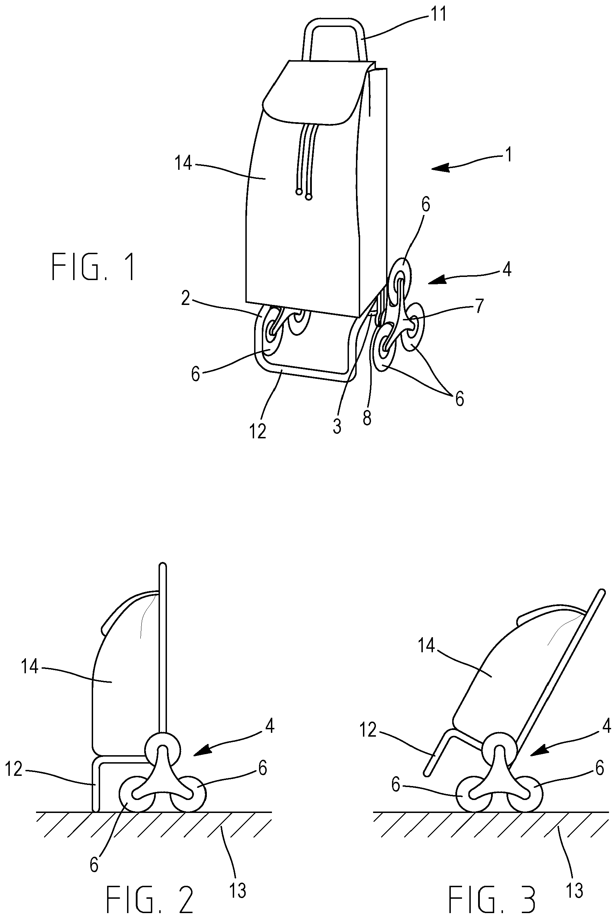

The example of a trolley 1 according to the invention is illustrated on figures 1 to 7. The trolley 1 comprises a frame 2 linked to a rear axle 3 on which two groups of wheels 4 are mounted, each group of wheels 4 comprising three wheels 6 on a support 7.

According to the invention, the trolley includes a ratchet device 8 which enables the selective rotation of the support 7 relative to the frame 2.

Each wheel 6 is connected to the support 7 through a wheel axle 9. The three wheels axles 9 are spaced apart of a same predetermined distance from the rear axle 3 and are arranged at 120 degrees from each other around the rear axle.

In the particular example of FIG. 1 the frame include a handle 11 for a user to move and to incline the trolley.

Advantageously, the frame can also include a front basis 12 in order to maintain the trolley stable when in the first position relative to the frame. The first position is represented in FIG. 2. In the first position two wheels 6 of each group of wheels 4 are on a ground 13 when the trolley 1 is in a vertical position with the front basis on the ground. Preferably the front basis 12 is a U shaped element of the frame 2.

The trolley 1 can be inclined around the rear axle 3 to the second position represented in FIG. 3. In the second position two wheels 6 of each group of wheels 4 are on the ground 13 when the trolley 1 is in oblique position with its front basis 12 off the ground. In the second position the trolley 1 can be moved on its wheels 4.

In the particular example of figures 1 to 3, the trolley comprises a container 14 to load the trolley 1. The container 14 can maintain several loads on the trolley 1 and avoids that these loads drop while the trolley is moved. The container 14 is mounted on the frame 2. The container 14 is a bag-like container. In a not shown alternative, the container is a bow-like container.

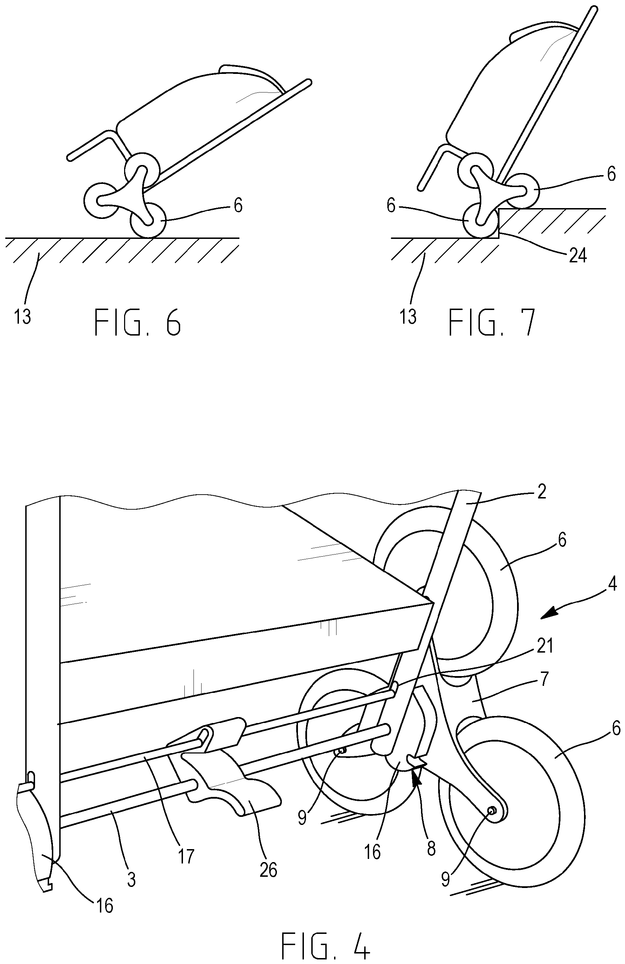

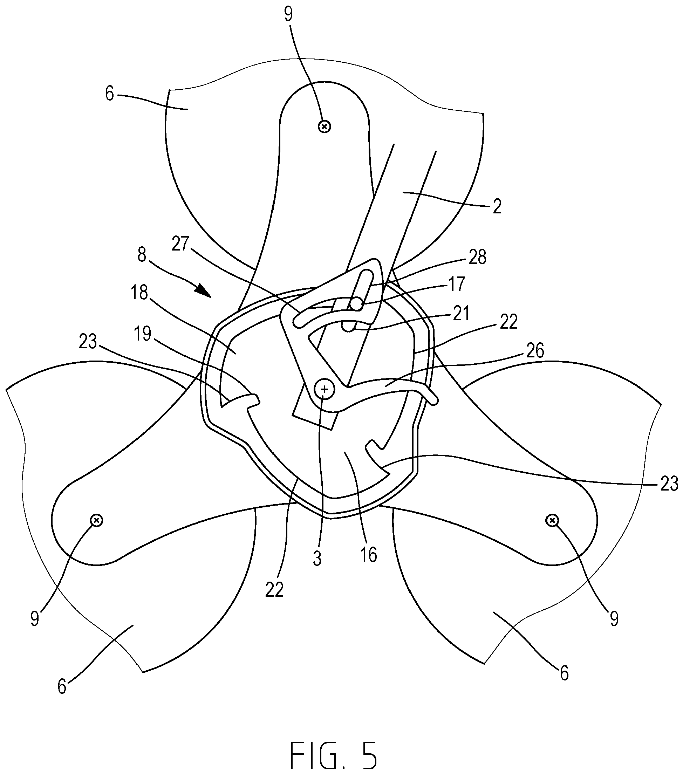

As illustrated in FIG. 4 and 5, the second position can be maintained stable by the ratchet device 8 blocking the rotation of the support 7 relative to the frame 2.

The ratchet device 8 include at least one ratchet wheel 16 cooperating with at least one pawl 17. The ratchet wheel 16 is connected to one support 7. Each support 7 is connected to a ratchet wheel 16. The ratchet wheel include three teeth 18 separated by three recesses 19.

The pawl 17 slides within at least one frame groove 21 of the frame 2 between a locking position and at least one release position. In the locking position, the pawl 17 is in one recess 19 of the ratchet wheel 16 in order to block the rotation of the ratchet wheel 16 relatively to the frame 2.

In the example of figures 4 and 5, the teeth 18 are designed as ratchet teeth. When the pawl 17 slides out of the recess 19 to a release position, the pawl can glide along a glide part 22 of one tooth if the ratchet wheel 18 is turned in a first direction. In the view of figure 5, the first direction is a clockwise direction. If the ratchet wheel 18 is turned in a second direction, opposite to the first direction, the pawl 17 will be pressed on a blocking part 23 of one tooth.

When the rotation of the ratchet wheel 16 relatively to the frame 2 is blocked, or when the pawl 17 is pressed on one blocking part 23, the trolley can be tilted in order to be used as a conventional two wheeled trolley as illustrated in the third position represented in FIG. 6.

The ratchet wheel 16 and the support 7 can turn in the first direction in order to enable the trolley to climb up obstacles 24 as illustrated in the fourth position represented in FIG. 7.

When the pawl 17 is on the glide part 22 of one teeth, the ratchet wheel 18 is able to turn in both first and second direction.

The movement of the pawl from the locking position to the at least one release position can be realized by a command. The command can be a pedal 26 rotating about the rear axle 3 connecting the two supports. Alternatively or complementary, in an embodiment not shown, the command can be realized by a grip.

The pawl traverses a pedal groove 27 of the pedal. The pawl slides within the pedal groove between the locking position and the release position. In the given example of FIG. 5, the pedal 26 is in the release position and can be turned clockwise to the locking position.

When the ratchet wheel 18 is turned in the first direction while the pedal 26 is in the release position, the pawl 17 slides radially outward within a radial extension 28 of the pedal groove 27 under the action of the glide part 22 of one tooth on the pawl 17. At the end of the glide part 22, the pawl 17 will slide radially inward under the action of its own weight, back to the initial position represented in FIG. 5. When the pedal 26 is in the release position, the ratchet device 8 has the effect of a conventional ratchet device, allowing the rear axle 3 to turn in only one direction. Alternatively or complementary, in an embodiment not shown, the pawl can slide radially inward under the action of at least one spring.

Of course, the invention is not limited to the examples which have just been described and numerous adjustments can be made to these examples, without exceeding the scope of the invention. The scope of the invention is defined in the appendent claims. In particular the different characteristics, forms and embodiments of the invention can be combined with each other in various combinations insofar as that they are not incompatible or mutually exclusive.

In particular the ratchet device 8 can include a torque resisting device in at least one direction to enable the selective rotation of the support 7 relative to the frame 2.

## Claims

1. A trolley (1) comprising a frame (2) linked to a rear axle (3) on which two groups of wheels (4) are mounted, each group of wheels (4) comprising three wheels (6) on a support (7), the three wheels axles (9) being spaced apart of a predetermined distance from the rear axle (3) and are arranged at 120 degrees from each other around the rear axle (3),
wherein a ratchet device (8) including at least one ratchet wheel (16) cooperating with at least one pawl (17) enables a selective rotation of the support (7) relative to the frame (2),
**characterized in that**,
the said ratchet wheel (16) has exactly three teeth (18) separated by exactly three recesses, and **in that**
the said ratchet device (8) enables to maintain the support (7) in a first position relative to the frame (2), such that two wheels (6) of each group of wheels (4) are on a ground (13) when the trolley (1) is in vertical position with a front basis (12) on the ground (13) and,
the said ratchet device (8) enables to maintain the support (7) in a second position relative to the frame (2), such that two wheels (6) of each group of wheels (4) are on the ground (13) when the trolley (1) is in oblique position with its front basis (12) off the ground (13),
and wherein when the ratchet device blocks the rotation of the support relative to the frame, the trolley can be tilted in order to be used as a conventional two wheeled trolley.

2. A trolley (1) according to claim 1, wherein the front basis (12) is a U shaped element of the frame (2).

3. A trolley (1) according to claim 1, wherein the ratchet wheel (16) is connected to one support (7).

4. A trolley (1) according to claim 3, wherein each support (7) is connected to a ratchet wheel (16).

5. A trolley (1) according to one of claims 1 to 4, wherein the pawl (17) slides within at least one frame groove (21) of the frame (2) between a locking position and a release position.

6. A trolley (1) according to claim 5, wherein in said locking position the pawl (17) is engaged in at least one recess (19) of the ratchet wheel (16).

7. A trolley (1) according to claim 5 or 6, wherein a command enables to move the pawl (17) from the locking position to the release position.

8. A trolley (1) according to claim 7, wherein the command is a pedal (26) rotating about the rear axle (3), said rear axle connecting the two supports (7).

9. A trolley (1) according to claim 8, wherein the pawl (17) slides within a pedal groove (27) of the pedal (26) between the locking position and the release position.

10. A trolley (1) according to any one of the preceding claims, wherein said frame (2) includes a handle (11).

11. A trolley (1) according to any one of the preceding claims, wherein said trolley (1) comprises a bag-like container (14) mounted on the frame (2).

## Patentansprüche

1. Trolley (1) mit einem Rahmen (2), der mit einer Hinterachse (3), an der zwei Rädergruppen (4) angeordnet sind, verbunden ist, wobei jede Rädergruppe (4) drei Räder (6) an einem Träger (7) aufweist und die drei Radachsen (9) in einem vorgegebenen Abstand von der Hinterachse (3) und in 120°-Winkeln voneinander um die Hinterachse (3) herum angeordnet sind,
wobei eine Ratscheneinrichtung (8) mit zumindest einem Sperrrad (16), das mit zumindest einer Sperrklinke (17) zusammenwirkt, eine selektive Drehung des Trägers (7) relativ zu dem Rahmen (2) ermöglicht,
**dadurch gekennzeichnet, dass**
das Sperrrad (16) genau drei Zähne (18) aufweist, die durch genau drei Aussparungen voneinander getrennt sind, und dass
die Ratscheneinrichtung (8) es ermöglicht, den Träger (7) in einer ersten Position relativ zu dem Rahmen (2) zu halten, sodass sich zwei Räder (6) jeder Rädergruppe (4) auf einem Boden (13) befinden, wenn sich der Trolley (1) in einer vertikalen Position mit einem Vordergestell (12) auf dem Boden (13) befindet, und
die Ratscheneinrichtung (8) es ermöglicht, den Träger (7) in einer zweiten Position relativ zu dem Rahmen (2) zu halten, sodass sich zwei Räder (6) jeder Rädergruppe (4) auf dem Boden befinden, wenn der Trolley (1) sich in einer schrägen Position befindet, mit seinem Vordergestell (12) ohne Kontakt zum Boden (13),
und wobei der Trolley gekippt werden kann, um wie ein konventioneller zweirädriger Trolley benutzt zu werden, wenn die Ratscheneinrichtung die Drehung des Trägers relativ zu dem Rahmen sperrt.

2. Trolley (1) nach Anspruch 1, wobei das Vordergestell (12) ein U-förmiges Element des Rahmens (2) ist.

3. Trolley (1) nach Anspruch 1, wobei das Sperrrad (16) mit einem Träger (7) verbunden ist.

4. Trolley (1) nach Anspruch 3, wobei jeder Träger (7) mit einem Sperrrad (16) verbunden ist.

5. Trolley (1) nach einem der Ansprüche 1 bis 4, wobei die Sperrklinke (17) in zumindest einer Rahmennut (21) des Rahmens (2) zwischen einer Verriegelungsposition und einer Freigabeposition gleitet.

6. Trolley (1) nach Anspruch 5, wobei die Sperrklinke (17) in der Verriegelungsposition in Eingriff mit zumindest einer Aussparung (19) des Sperrrades (16) steht.

7. Trolley (1) nach Anspruch 5 oder 6, wobei ein Steuerelement eine Bewegung der Sperrklinke von der Verriegelungsposition in die Freigabeposition ermöglicht.

8. Trolley (1) nach Anspruch 7, wobei das Steuerelement ein Pedal (26) ist, das um die Hinterachse (3) rotiert, wobei die Hinterachse (3) die zwei Träger (7) verbindet.

9. Trolley (1) nach Anspruch 8, wobei die Sperrklinke (17) in einer Pedalnut (27) des Pedals (26) zwischen der Verriegelungsposition und der Freigabeposition gleitet.

10. Trolley (1) nach einem der vorstehenden Ansprüche, wobei der Rahmen (2) einen Griff (11) aufweist.

11. Trolley (1) nach einem der vorstehenden Ansprüche, wobei der Trolley einen taschenartigen Behälter (14) aufweist, der an dem Rahmen (2) angeordnet ist.

## Revendications

1. Chariot (1) comprenant un cadre (2) relié à un essieu arrière (3) sur lequel deux groupes de roues (4) sont montés, chaque groupe de roues (4) comprenant trois roues (6) sur un support (7), les essieux des trois roues (9) étant espacés d'une distance prédéterminée par rapport à l'essieu arrière (3) et étant agencés à 120 degrés l'un de l'autre autour de l'essieu arrière (3),
dans lequel un dispositif à rochet (8) incluant au moins une roue à rochet (16) agissant en coopération avec au moins un cliquet (17) permet une rotation sélective du support (7) relativement au cadre (2),
**caractérisé en ce que**,
ladite roue à rochet (16) a exactement trois dents (18) séparées par exactement trois évidements, et **en ce que**
ledit dispositif à rochet (8) permet de maintenir le support (7) dans une première position relativement au cadre (2), de telle sorte que deux roues (6) de chaque groupe de roues (4) se trouvent sur un sol (13) lorsque le chariot (1) est en position verticale avec une base avant (12) sur le sol (13) et,
ledit dispositif à rochet (8) permet de maintenir le support (7) dans une deuxième position relativement au cadre (2), de telle sorte que deux roues (6) de chaque groupe de roues (4) se trouvent sur le sol (13) lorsque le chariot (1) est en position oblique avec sa base avant (12) sans contact avec le sol (13),
et dans lequel lorsque le dispositif à rochet bloque la rotation du support relativement au cadre, le chariot peut être basculé afin d'être utilisé en tant que chariot conventionnel à deux roues.

2. Chariot (1) selon la revendication 1, dans lequel la base avant (12) est un élément en forme de U du cadre (2).

3. Chariot (1) selon la revendication 1, dans lequel la roue à rochet (16) est raccordée à un support (7).

4. Chariot (1) selon la revendication 3, dans lequel chaque support (7) est raccordé à une roue à rochet (16).

5. Chariot (1) selon l'une des revendications 1 à 4, dans lequel le cliquet (17) coulisse au sein d'au moins une rainure de cadre (21) du cadre (2) entre une position de verrouillage et une position de libération.

6. Chariot (1) selon la revendication 5, dans lequel dans ladite position de verrouillage le cliquet (17) est en prise dans au moins un évidement (19) de la roue à rochet (16).

7. Chariot (1) selon la revendication 5 ou 6, dans lequel une commande permet de faire bouger le cliquet (17) depuis la position de verrouillage à la position de libération.

8. Chariot (1) selon la revendication 7, dans lequel la commande est une pédale (26) rotative autour de l'essieu arrière (3), ledit essieu arrière raccordant les deux supports (7).

9. Chariot (1) selon la revendication 8, dans lequel le cliquet (17) coulisse au sein d'une rainure de pédale (27) de la pédale (26) entre la position de verrouillage et la position de libération.

10. Chariot (1) selon l'une quelconque des revendications précédentes, dans lequel ledit cadre (2) inclut une poignée (11).

11. Chariot (1) selon l'une quelconque des revendications précédentes, dans lequel ledit chariot (1) comprend un contenant du type sac (14) monté sur le cadre (2).
